# EUROPÄISCHE PATENTANMELDUNG

(11) **EP 0 761 294 A1**
(43) Veröffentlichungstag der Anmeldung: **12.03.1997**
(21) Anmeldenummer: 96810583.3
(22) Anmeldetag: 05.09.1996
(51) Int. Cl.: B01F 3/04, C02F 3/20, F16B 5/06

(54) **Belüfter**

(30) Priorität: 06.09.1995 CH 2527/95
(71) Anmelder: BONTEC AG, 8716 Schmerikon (CH)
(72) Erfinder: Heck, Urs, 8716 Schmerikon (CH)
(74) Vertreter: Legland, Brynjulv

(57) **Zusammenfassung**

Die Erfindung betrifft einen Belüfter mit einer perforierten Membrane (7) und einem plattenförmigen Trägerelement (5). In einer Ausführung bildet die Membrane (7) mit einer zweiten nicht perforierten Membrane (8) zusammen ein Kissen, in dem sich ein Luftraum befindet. Die Membranen (7,8) sind punktuell in Befestigungspunkten (2) miteinander verbunden. Das Kissen ist am Trägerelement (5) befestigt.

In einer zweiten Ausführung ist die erste Membrane am Umfang direkt mit dem Trägerelement verbunden und bildet mit diesem einen Luftraum. Die Membrane und das Trägerelement sind punktuell an Befestigungspunkten miteinander verbunden.

Die Befestigungspunkte (2) werden durch Frequenzschweissen, Vulkanisation oder Kleben luftdicht erstellt und sind von ringförmigen Wülsten (19) umgeben, in deren Mitte jeweils ein Befestigungsloch (2) eingestanzt ist. Die Wülste (19) kommen dabei in Rillen (19) in den Rondellen (17,18) zu liegen, damit die Membrane (7,8) beim Anziehen der Schraube (15) festgehalten wird.

Bei der Ausführung mit zwei Membranen (7,8) werden diese vorzugsweise durch Vulkanisation miteinander verbunden.

Durch den Wegfall der bisher verwendeten Leisten zur Befestigung der Membrane am Trägerelement wird die Lebensdauer des Belüfters stark verbessert und die Kosten reduziert.

## Beschreibung

Die Erfindung betrifft einen Belüfter bzw. ein Belüfterelement gemäss dem Oberbegriff des ersten Patentanspruches.

Derartige Elemente werden zum feinblasigen Belüften von Wasser, z.B. in biologischen Abwasser-Reinigungsanlagen oder zur Sauerstoffzufuhr zur Verbesserung der Lebensbedingungen in Binnenseeen eingesetzt.

Belüfter oder Gasverteiler dieser Art sind z.B. in EP-A-0 359 698 (Messner) beschrieben, in der eine perforierte Membrane an der Umrandung eines Trägerelementes festgehalten wird, wobei die zwischen ihm und der Membrane zugeführte Luft eine Wölbung der Membrane infolge des Luftdruckes bewirkt. Diese Wölbung kann unter bestimmten Bedingungen sehr stark werden, wobei es sich erwiesen hat, dass die Luftströmung durch die perforierte Membrane nur im Bereich der stärksten Wölbung, d.h. nur im Mittelbereich des Elementes oder der Belüfterplatte zufriedenstellend verläuft. In einem breiten Umfangbereich der Membrane ist die Strömung gering bzw. unbefriedigend, was auf die starke Wölbung zurückzuführen ist.

Es wird ferner auf EP-A-0 359 698 (Heck) und insbesondere auf die darin erwähnten Querträger zur Niederhaltung der Membrane hingewiesen. Diese Ausführung ist an sich zweckmässig, jedoch eher kostspielig, so dass eine preisgünstigere Variante oder Kombination mit einem anderen Mittel zur Niederhaltung der Membrane gesucht wird.

Aufgabe der Erfindung ist somit die Schaffung eines Belüfters, der nicht die Nachteile der bestehenden aufweist, und bei dem der Luftstrom über die gesamte Plattenfläche gleichmässiger erfolgt als bisher. Ferner soll die Lebensdauer der Belüfter erhöht werden, um ein häufiges Auswechseln derselben zu vermeiden. Zudem wird eine preisgünstige Lösung mit niederen Wartungskosten angestrebt

Diese Aufgabe ist durch die Merkmale im Kennzeichnungsteil des ersten Patentanspruches gelöst.

Ausführungsformen sind in den abhängigen Ansprüchen umschrieben.

Die beschriebene Ausführung besitzt gegenüber den bisherigen Ausführungen die folgenden Vorteile:

Durch Verwendung von Luftkammern der beschriebenen Art kann die Wölbung des unter Druck stehenden Balges stark reduziert werden, so dass die Strömung aus der gesamten Balgfläche praktisch gleichmässig erfolgt.

Die balgartige Ausführung der Luftkammer erfordert keine Abdichtung gegenüber dem Trägerelement, so dass deren Lebensdauer erhöht wird. Wenn eine Belüfterplatte ersetzt werden muss, so genügt es im Normalfall, die Luftkammer bzw. den Balg zu ersetzen.

Nachfolgend werden Ausführungsbeispiele des erfindungsgemässen Belüfters anhand der Zeichnung näher erläutert. Es zeigen:

- Fig. 1: eine Draufsicht eines Belüfterelementes,
- Fig. 2: einen Schnitt längs der Linie A-A in Fig. 1 in grösserem Massstab,
- Fig. 3: einen Schnitt längs der Linie B-B in Fig. 1 in grösserem Massstab,
- Fig. 4: einen detaillierten Schnitt gemäss Fig. 1 mit einer Rondelle aus Kunststoff bzw. aus Stahl, und
- Fig. 5: einen detaillierten Schnitt gemäss Fig. 3.

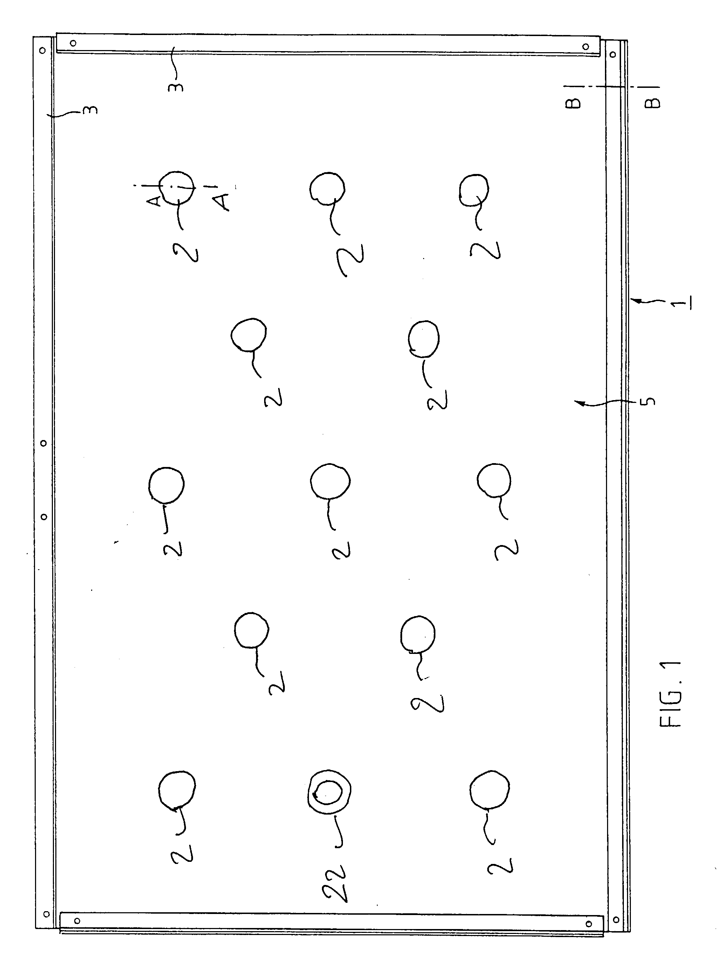

Fig. 1 bis 3 zeigen ein Belüfterelement 1 mit Befestigungslöchern 2 und Befestigungsschienen 3, die über Befestigungsvorrichtungen 4 mit einem Trägerelement 5 verschraubt sind. Ein Belüfterbalg 6 besteht aus einer perforierten oberen Membrane 7 und einer nicht perforierten unteren Membrane 8, die am Umfang miteinander luftdicht verschlossen sind. Die Befestigungsvorrichtung 4 umfasst ein U-Profil 9, eine Leiste 10, eine Gewindehülse 11 und eine Schraube 12.

Die beiden Membranen 7 und 8 sind vorzugsweise durch Hochfrequenzschweissen oder Vulkanisation miteinander verbunden, wobei auch ein Kleben möglich ist.

Die Membranen 7,8 bestehen aus dem gleichen Kunststoff, wobei nur in die obere Membrane 7 ein Gewebe zur Eindämmung der Dehnbarkeit eingebettet sein kann. Die untere Membrane 8 kann sich deshalb nicht ausdehnen, weil sie gegen ein Trägerelement anliegt. Anstelle des Gewebes kann auch ein Netz verwendet werden, das über die Membrane 7 gelegt wird und mit der Membrane zusammen am Unfang verschweisst ist. Bei einer Ausführung mit nur einer Membrane kann das Netz am Umfang mit dieser Membrane verklemmt werden, wie dies im Patent Heck gezeigt ist.

Die Gewindehülse 11 ist mit einem Kragen 13 versehen und wird von unten versenkt in ein Bohrloch 14 im Trägerelement 5 eingesetzt und darin mit der Schraube 12 in Eingriff gebracht. Die Schraube 15 dient zur Befestigung des U-Profils 9 zur Versteifung des Belüfters oder des Belüfterelementes 1. Der versenkte Einbau der Gewindehülse 11 dient u. a. zur Verhinderung einer Kontaktkorrosion für den Fall, dass das Trägerelement 5 oder Einzelteile davon nicht aus Kunststoff sondern aus Metall bestehen.

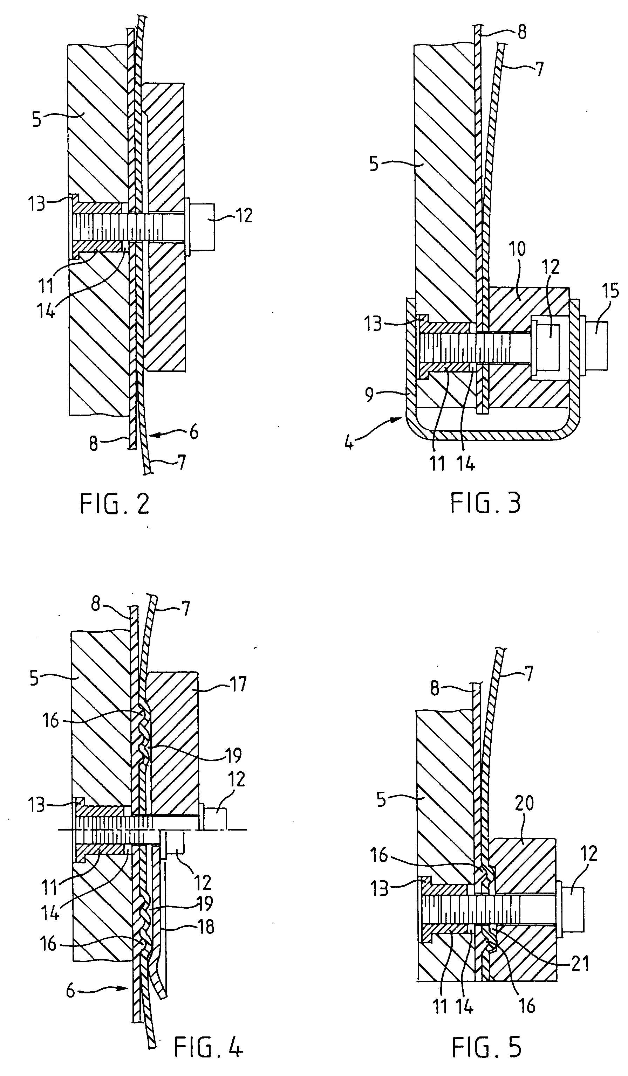

Damit die Dehnbarkeit der oberen Membrane 7 eingeschränkt wird, ist diese an mehreren Schweissstellen mit Löchern 2 versehen, die von kreisförmigen Schweisswulsten 16 (Fig. 4) umgeben sind. Damit der Zug im Lochbereich etwas reduziert wird, sind die Rondellen 17 aus Kunststoff oder Stahl 18 jeweils mit kreisförmigen Ausnehmungen 19 versehen. Diese Ausnehmungen 19 fassen die Schweisswulste derart, das die Zugspannung rund um das Loch 2 reduziert wird.

Das Andrücken des Balges 6 gegen das Trägerelement erfolgt in gleicher Weise, wie dies in Verbindung mit Fig. 3 beschrieben wurde. Bei einem Belüfterelement von 1 x 1.5 m sind normalerweise 12 Befestigungsstellen vorgesehen, d.h. dass 12 Rondellen benötigt werden, um die beiden Membranen 7 und 8 am Trägerelement 5 zu befestigen. Der Luftanschluss zur Zufuhr von Luft oder Sauerstoff befindet sich am Trägerelement und ist an sich bekannt.

Wie bereits erwähnt, sind die beiden Membranen 7 und 8 am Rande durch Hochfrequenzschweissen oder Vulkanisation miteinander verbunden. Dabei entstehen gerade Wülste 16 (Fig. 5), die innerhalb einer Ausnehmung 21 einer Randleiste 20 derart zu liegen kommen, dass die Zugbeanspruchung auf die obere Membrane 7 infolge des Luftdrucks reduziert wird. Die Ausdehnung der oberen Membranen ist relativ klein, weil sie vorzugsweise mit einer Gewebeeinlagen versehen ist.

Die beschriebenen Leisten 10 und das Trägerelement 5 sind vorzugsweise aus recyclierbarem Kunststoff hergestellt.

Die Rondellen 17 aus Kunststoff werden z.B. von einem runden Zylinder abgeschnitten und auf einem Drehautomaten auf die passende Form gebracht. Es ist aber auch möglich, die Rondellen 17 aus Kunststoff in einem Spritzverfahren zu erzeugen, was u.U. ein günstigeres Herstellungsverfahren ist.

Die Rondellen 18 aus Stahl werden vorzugsweise in einem Pressverfahren hergestellt.

Die Befestigungslöcher 2 im Balg 6 bzw. in den Membranen 7,8 werden durch Stanzen hergestellt.
Ein weiterer Vorteil der Membranen 7,8 mit eingebettetem Gewebe liegt darin, dass sie widerstandsfähiger inbezug auf alle Beanspruchungen sind als Membranen ohne Gewebe.

In der vorangehenden Beschreibung wurde von einem viereckigen Trägerelement ausgegangen. Das Trägerelement kann aber ebenso gut dreieckig oder rund sein oder auch eine andere geometrische Form aufweisen.

Die Luftzufuhr erfolgt von oben durch das Trägerelement 5 und die obere Membrane 7, damit keine Entwässerungsvorrichtung erforderlich ist. Bei der Luftzufuhr von oben wird verhindert, dass sich Feuchtigkeit in der Zufuhrleitung ansammeln kann.

Bei der vorliegenden Ausführung konnte, gegenüber bestehenden Ausführungen der Luftkammer, die Wölbung um 75% reduziert werden.

Bei herkömmlichen Ausführungen wurde meistens Kunststoff als Trägerelement oder als Trägerplatte verwendet, jedoch können z.B. auch Platten aus dünnem, rostfreiem Stahlblech oder einem sonstigen Metall, beispielsweise Leichtmetall, benutzt werden. Bei der Auswahl des Metalls ist es wichtig, dass Korrosion vermieden wird. Wegen der höheren Festigkeit von Metallen kann es vermieden werden, dass die Verwendung von Metall mit einem höheren Gewicht verbunden ist.

Der Anschluss 22 für die Luftzuführ zum Luftraum befindet sich auf der Aussenseite des Trägerelementes 5, das meistens aus Kunststoffbesteht, jedoch auch aus Metall bestehen kann.

Wegen der höheren Festigkeit von Metallen gegenüber Kunststoff kann ein höheres Gewicht vermieden werden.

Beim Belegungsgrad der Fläche eines Reinigungsbecken kann es vorteilhaft sein, dass das Verhältnis der belegten Fläche zur Gesamtfläche relativ gross ist. Bei ansteigendem Belegungsgrad kann die Anzahl der Perforationen reduziert werden.

Die preisgünstigste Variante ist in Verbindung mit EP-A-0 586 329 (Heck) möglich, bei der nur eine Membrane punktuell mittels der über die gesamte Oberfläche verteilten Rondellen mit dem Trägerelement 5 verbunden ist. Bei dieser Ausführung fallen die Querträger zur Niederhaltung der Membrane weg. Somit können entweder zwei Membranen zu einem Kissen verbunden werden, oder eine Membrane direkt auf ein Trägerelement montiert werden, wie dies im Patent Heck, z. B. Fig. 9 und 10, gezeigt ist.

Anstelle der erwähnten Membrane mit darin eingegossener Gewebeeinlage kann ein Netz benutzt werden, das über die Membrane 7 eingespannt wird und sie daran hindert, sich zu stark zu erweitern. Das nicht gezeigte Netz kann z.B. aus Glasfasern oder Kunststoff bestehen und lässt sich entweder mit der oberen Membrane zusammen verschweissen oder kann mit ihr zusammen am Trägerelement festgeklemmt werden. Bei der kissenartigen Ausführung wird die nichtperforierte Membrane gegen das Trägerelement gepresst und muss demzufolge nicht gegen eine zu starke Ausbuchtung geschützt werden.

## Patentansprüche

1. Belüfter mit Trägerelement zur feinblasigen Zufuhr von Luft bzw. Sauerstoff zur Reinigung von Wasser, vorzugsweise in biologischen Abwasser-Reinigungsanlagen, mit einer über dem Trägerelement (5) befindlichen Luftkammer, die durch eine perforierte Membrane (7) begrenzt ist, dadurch gekennzeichnet, dass die Membrane (7) im Luftraum mit dem Trägerelement (5) punktuell an mehreren Stellen (2) der Oberfläche luftdicht verbunden ist.

2. Belüfter nach Anspruch 1, dadurch gekennzeichnet, dass sich die Luftkammer in einem Kissen mit zwei Membranen (7,8) befindet, das am Trägerelement (5) befestigt ist, wobei die untereMembrane (8) nicht perforiert ist, und dass die beiden Membranen (7,8) an ihrem Umfang luftdicht verschlossen sind.

3. Belüfter nach Anspruch 1 oder 2, dadurch gekennzeichnet, dass mindestens die perforierte Membrane (7) mit einer Gewebeeinlage zur Reduktion der Dehnbarkeit versehen ist.

4. Belüfter nach Anspruch 1 oder 2, dadurch gekennzeichnet, dass mindestens die eine Membrane (7) mit einem Netz zur Reduktion der Ausweitung der Membrane (7) versehen ist.

5. Belüfter nach Anspruch 2, dadurch gekennzeichnet, dass die punktuellen luftdichten Stellen (2) von einem oder mehreren ringförmigen Schweisswülsten (16) umgeben sind (Fig. 4).

6. Belüfter nach Anspruch 5, dadurch gekennzeichnet, dass mehrere ringförmige Schweisswülste (16) vorhanden sind, in deren Mitte sich ein Loch (2) zur Befestigung am Trägerelement (5) vorhanden ist.

7. Belüfter nach einem der Ansprüche 1 - 6, dadurch gekennzeichnet, dass das Kissen (6) oder die mit Löchern versehene Membrane (7)jeweils mittels Rondellen (17,18), Schrauben (12) und einer Gewindehülse (11) mit Kragen (13) am Trägerelement (5) befestigt ist, und dass die Gewindehülsen (12) versenkt eingesetzt sind, damit der Kragen (13) zur Vermeidung von Kontaktkorrosion vom Trägerelement (5) beabstandet ist.

8. Belüfter nach Anspruch 7, dadurch gekennzeichnet, dass die Rondellen (17,18) aus Kunststoff und/oder Stahl hergestellt sind.

9. Belüfter nach Anspruch 7 oder 8, dadurch gekennzeichnet, dass die Rondellen (17,18) auf der der oberen Membrane (7) zugekehrten Seite ringförmige Rillen (19) aufweisen, in welche Schweisswülste (16) zur Halterung der Membrane (7) hineinpassen (Fig. 4).

10. Belüfter nach Anspruch 2, dadurch gekennzeichnet, dass die beiden Membranen (7,8) am Umfang durch Hochfrequenzschweissen, Vulkanisation oder Kleben miteinander verbunden sind.
